# EUROPEAN PATENT SPECIFICATION

(11) **EP 2 773 198 B1**
(45) Date of publication and mention of the grant of the patent: **13.06.2018**
(21) Application number: 12829191.1
(22) Date of filing: 02.11.2012
(51) Int. Cl.: A01N 25/14, A01N 25/28, A01N 53/00

(54) **VARIABLE RELEASE WATER DISPERSIBLE GRANULE COMPOSITION**
WASSERDISPERGIERBARE GRANULATZUSAMMENSETZUNG MIT VARIABLER VARIABLER FREISETZUNG
COMPOSITION DE GRANULÉ HYDRODISPERSIBLE À LIBÉRATION VARIABLE

(30) Priority: 02.11.2011 IN MM30812011
(43) Date of publication of application: 10.09.2014
(73) Proprietor: Shah, Deepak, Juhu, Mumbai- 400 009 MAH (IN)
(72) Inventor: RAMDAS, Puthenveetil Kunjukrishna Menon, Sanpada 400705 Navi Mumbai Maharashtra (IN)
(74) Representative: Casalonga
(86) International application number: PCT/IN2012/000721
(87) International publication number: WO 2013/105107

(56) References cited:
- EP-A1- 1 840 145
- EP-A2- 0 368 576
- WO-A1-00/05951
- WO-A1-96/39822
- WO-A1-2007/042438
- US-A- 4 936 901
- US-A- 5 662 916
- US-A1- 2007 078 071
- US-A1- 2007 238 615

## Description

### FIELD OF INVENTION

The present invention relates to a water dispersible granular composition comprising microcapsules encapsulating at least one agrochemical active ingredient. The present invention further relates a water dispersible granular composition comprising microcapsules encapsulating at least one first agrochemical active ingredient and at least one second agrochemical active ingredient, which is not encapsulated.

### BACKGROUND OF INVENTION

Various agrochemical active ingredients have been known to be encapsulated, to provide safety to the user, to provide a controlled release and longer control in application on the crop, or due to reasons, for example, when the active ingredient is volatile.

Microcapsules or Capsulated Suspensions are more unstable as compared to water dispersible granules. Also, capsulated suspensions suffer from disadvantages of higher packaging costs, volatility losses, etc. when compared to water dispersible granules. Dry forms such as water dispersible granules are preferred as they can be stored for longer periods of time, over wide extremes of temperature, without destroying the stability of the formulation.

US5925464 discloses a process for preparing water dispersible granule comprising microcapsules employing polyvinyl alcohol. The formulation, when added to water, tends to show poor dispersion and also settles down and has poor suspensibility.

US5639710 also discloses water dispersible granule compositions containing microcapsules employing polyvinyl alcohol. These formulations suffer from various disadvantages such as poor bioefficacy. Furthermore, US5639710 , which preferably uses ATLOX 3409 comprises alkyl phenol ethoxylates, which are undesirable and have been banned in various Geographies due to the toxicity associated with such compounds. Also, upon dissolution in water prior to spraying, it has been observed that the formulation does not suspend well and clogs the nozzles of knapsack sprayers.

Essentially, water dispersible granules of microcapsules employing Polyvinyl alcohol are meant to provide "knock down" or fast release but do not provide a continued sustained biological effect, and there remains a need to apply further pesticide to control crop damage. It is also observed in some cases that the active ingredient encapsulated with Polyvinyl alcohol also do not release as required, and pose a problem to the user and the environment.

Water dispersible granule compositions employing polyurea capsules such as those disclosed in US 5354742 are not preferred as it has been observed that there is a larger delay in the release of the encapsulated active and many a times, the active is not released, causing damage and loss to the user and to the environment. These compositions suffer from a larger particle size distribution.

Thus, not only is there a need to develop a safe, water dispersible granular composition comprising an encapsulated active ingredient but there is a greater need to provide a composition which can provide an active ingredient quickly and also over a longer period of time.

Furthermore, there is a need to provide water dispersible granular compositions of active ingredients which are incompatible by nature. Alternatively, there is a need to provide a water dispersible granule composition of two active ingredients, while immediately providing one active ingredient and delaying the release of the other active. While several combinations of active ingredients have been formulated, providing a synergistic long-term control, while controlling the release of a particular active ingredient, in the form of a water dispersible granule, still remains a challenge. US4936901 and EP1844653 disclose a water dispersible granule composition which comprises a first active ingredient which is encapsulated and a second active ingredient which is not encapsulated. However, these compositions suffer from poor properties of dispersion, suspension and efficacy.

### SUMMARY OF THE INVENTION

Surprisingly, the inventors have determined that a water dispersible granular composition according to claim 1 demonstrates surprisingly higher efficacy, release properties and physical behaviour.

One embodiment relates to a water dispersible granular composition comprising microcapsules encapsulating at least one agrochemical active ingredient within a urea formaldehyde polymeric shell wall, and optionally microcapsules encapsulating the at least one agrochemical active ingredient within a polyurea shell wall, at least one particulate inert filler and at least one agrochemical excipient, -the microcapsules comprising at least one non-ionic surfactant selected from the group consisting of block copolymers of polyalkylene glycol ether and hvdroxvstearic acid, ethoxylated alcohols, ethoxylated tristyrylphenols, etho-propoxylated tristyrylphenols, alkoxylated triglycerides.

The inventors have also surprisingly determined that a water dispersible granular composition according to the invention, further comprising at least one second agrochemical active ingredient, which is not encapsulated, wherein the composition has a particle size of 0.1 microns to 50 microns demonstrates surprisingly superior efficacy and physical properties of great advantage to the user.

The inventors have also surprisingly determined that a water dispersible granule composition comprising microcapsules comprising at least one active ingredient encapsulated within a polyurea shell wall, wherein the microcapsules comprise at least one first surfactant from the group consisting of block copolymer of polyalkylene glycol ether and hydroxystearic acid, etho-propoxylated tristyrlphenols, and alkoxylated triglycerides, and a second surfactant selected from the group consisting of polalkylene glycol ether and polyvinyl alcohol; at least one inert filler; and at least one agrochemical excipients, wherein the composition exhibits increased efficacy and is highly advantageous to the user.

### DETAILED DESCRIPTION

The present invention relates to a water dispersible granular composition according to claim 1.

One embodiment relates to a water dispersible granular composition comprising microcapsules encapsulating at least one agrochemical active ingredient within a urea formaldehyde polymeric shell wall and optionally within a polyurea shell wall, at least one particulate inert filler and at least one agrochemical excipients, the microcapsules comprising at least one non-ionic surfactant selected from the group consisting of block copolymers of polyalkylene glycol ether and hydroxystearic acid, ethoxylated alcohols, ethoxylated tristyrylphenols, etho-propoxylated tristyrylphenols, alkoxylated triglycerides.

The water dispersible granules of the invention comprise an aggregation of individual essentially spherical microcapsules of at least agrochemical active ingredient encapsulated within a polymeric shell wall. Upon contact with an aqueous medium, the granules of the encapsulated active ingredient disintegrate to release the individual microcapsules of encapsulated material, dispersing uniformly throughout the said aqueous medium.

Surprisingly, the inventors have also determined that the composition of the water dispersible granule comprising the microcapsules encapsulating the active ingredient, eliminates the use of any anti-settling or anti-caking agents such as xanthum gum, etc., while possessing excellent suspension and dispersion properties when added to water.

The agrochemical active ingredient can be a pesticide, plant growth regulant, etc.

The composition may comprises microcapsules encapsulating the agrochemical active ingredient in an aminoplast shell wall alone. The composition can also comprise microcapsules encapsulating the active ingredient in an aminoplast shell wall and a polyurea shell wall. The active ingredient in the aminoplast microcapsules can be the same as the active ingredient in the polyurea shell wall. Alternatively, the active ingredient in the aminoplast shell wall and the polyurea shell wall can be different.

According to an embodiment, the agrochemical active ingredient can be an insecticide, a fungicide, a herbicide, an acaricide or a mixture there of. According to an embodiment, the agrochemical active ingredient is a water- immiscible active. According to an embodiment, the agrochemical active ingredient can be a low-melting pesticide or a liquid pesticide, or can be a solid rendered into a liquid form through use of a solvent or other means.

The following list of pesticides which can be used individually or in mixtures,without limitation.

According to an embodiment, the agrochemical active ingredient is a pyrethroid insecticide. According to a further embodiment, the agrochemical active ingredient is a pyrethroid insecticide and another insecticide.

According to a further embodiment, the agrochemical active ingredient is lambda cyhalothrin. According to a further embodiment, the agrochemical active ingredient comprises cypermethrin and chloropyrifos.

According to another embodiment, the active ingredient is clomazone. According to another embodiment, the active ingredient is pendimethalin. According to another embodiment, the active ingredient is 2,4 D ethyl ester.

The agrochemical excipient can be one or more of surfactants (including dispersing, wetting agents and emulsifiers), antifoaming agents, permeability enhancing agents, solvents, thickners, if required, or other agents used in the formation of the microcapsules and the water dispersible granule formulation.

The agrochemical active ingredient is first encapsulated by standard methods of encapsulation. Various methods of encapsulation are known such as coacervation encapsulation, interfacial condensation polymerization, and fluid bed coating.

Preferably, according to an embodiment of the invention, interfacial condensation polymerization is employed for the production of microcapsules. The microencapsulation process involves preparation of an aqueous phase and an organic or oil phase. At first, the oil or organic phase is prepared by mixing the active ingredient, a monomer and a surfactant, that is an emulsifier. The organic phase can also include other optional components, such as cross-linking agents and permeability enhancing agents such as castor oil. The oil phase can also have a solvent to render the active ingredient in a liquid form.

The aqueous phase is prepared by mixing water, dispersing agents and other emulsifiers, if required. Optionally, a second water soluble monomer is also added to the aqueous phase depending on the type of polymer wall that is desired. The organic phase is added to the aqueous phase under high shear or agitation to form a dispersion of small droplets of the organic phase with the aqueous phase. The dispersion is kept in general for the polymerization reaction to continue around 2 hours. Optionally, a catalyst is added to the dispersion slowly under shear. The pH of the dispersion is then neutralized depending on the active ingredient, and depending on the type of shell wall polymer.

In the preparation of a polyurea shell wall, any diisocyanate or polyisocyanate, or mixtures thereof may be employed in the oil phase. Typical isocyanates that can be employed include polymethylenepolyphenyleneisocyanate (PMPPI), hexmethylenediisocyanate (HMDI), isophoronediisocyanate (IPDI), and methylene diphenyl diisocyanate (MDI). The aqueous phase carries a polyamine such as ethylene diamine, propylene 1,3 - diamine, tetramethylene diamine, pentamethylene diamine, 1,6-hexamethylene diamine, diethylene triamine, triethylene diamine and tetraethylenepentamine.

In preparation of an aminoplast shell wall, a butylated urea formaldehyde resin is used as the monomer.

Solvents which can be used to dissolve the active ingredient if necessary, include but are not limited to aromatic chlorinated hydrocarbons, chlorinated maleic hydrocarbons, ketones, long chain esters and mixtures thereof, (commercially available as Solvesso 100, Solvesso 150, Solvesso 200, Solvesso 150ND, Solvesso 200ND, Aromatic 200, Hydrosol A 200, Hydrosol A 230/270, Caromax 20, Caromax 28, Aromat K 150, Aromat K 200, Shellsol A 150, Shellsol A 100, Fin FAS-TX 150, Fin FAST-TX 200), Xylene, Cyclohexane, Cyclopentane, Pentane, Hexane, Heptane, 2-Methylpentane, 3-Methylpentane, 2-Methylhexane, 3-Methylhexane, 2-methylbutane, 2,3-Dimethylpentane, Methycyclopentane, Methylcyclohexane, 2,4 Dimethylpentane, Benzene, 1-Pentene, 2-Pentene, 1-Hexene, 1-Heptene, Cyclohexen, 1-Butanol, Ethylvinylether, Propylether, Isopropylether, Butylvinylether, Butylethylether, 1,2-Epoxybutane, Furan, Tetrahydropyran, 1-Butanal, 2-methylpropanal, 2-Pentanone, 3-Pentanone, Fluorbenzene, Hexafluorobenzene, Ethylformate, Propylformate, Isopropylformate, Ethylacetate, Vinylacetate, isopropylacetate, Ethylpropionate, Methylacrylate, Ethylacrylate, Methyl-methacrylate, Chlorethane, 1-Chlorpropane, 2-Chloropropane, 1-Chlorobutane, 2-Chlorobutane, 1-Chloro-2-methylpropane, 2-Chloro-2-methylpropane, 1-Chloro-3-methylbutane, 3-Chloropropene, Dichloromethane, Trichloromethane, Tetrachlormethane, 1,1-Dichloroethane, 1 ,2-Dichloroethane, 1 ,2-Dichlorpropane, 1,1,1-Trichloroethane, 1 ,1-Dichlorethylene, 1 ,2-Dichlorethylene, Trichlorethylene, Brommethane, 1- Bromopropane, 2-Bromopropane, 1-Bromobutane, 2-Bromobutane, 2-Bromo-2-methylpropane, Bromomethylene, lodomethane, lodoethane, 2-lodopropane, Trichloro- fluoromethane, Dichlorofluoromethane, Dibromofluoromethane, Bromchlormethane, Bromochloorfluoromethane, 1 , 1 ,2-Trichloro-1 ,2,2-trifluoroethane, 1 , 1 ,2,2- Tetrachlorodifluoroethane, 1 ,2-Dibromotetrafluoroethane, Diflouroethane, 1 ,1-Dichloro-2,2-Difluoroethylene, Propionitrile, Acrylonitrile, Methacry- lonitrile, Triethylamine, carbon disulfide, 1-Butanethiole, Methylsulfide, Ethylsulfide and Tetramethylsilane.

The microcapsules formed by polymerization comprises at least one or more of the following non-ionic surfactants: block copolymers of polyalkylene glycol ether and hydroxystearic acid, ethoxylated alcohols, ethoxylated tristyrlphenols, etho-propoxylated tristyrlphenols, alkoxylated triglycerides.

The microcapsules can also further comprise other non-ionic surfactants such as polyalkylene glycol ether or ethylene oxide-propylene oxide copolymers.

Commercially, the polyalkylene glycol ether or ethylene oxide - propylene oxide copolymer surfactants are sold under the following tradenames: Atlas G5000, TERMUL 5429. Commercially, block copolymers of polyethylene glycol ether and hydroxystearic acid are available as TERMUL 2510, Arlacel P135, Hypermer 8261, Hypermer B 239, Hypermer B261, Hypermer B246sf, Solutol HS 15. Etho-propoxylated tristyrlphenols are available as Soprophor 796/P, Soprophor TSP/461, Soprophor TSP/724. Alkoxylated triglycerides are commercially available as Croduret 40, Etocas 200, Etocas 29, Rokacet R26. Ethoxylated alcohols are commercially available as CHEMONIC OE-20.

According to another embodiment, the microcapsules are formed using a combination of non-ionic surfactants. According to an embodiment, the microcapsules are formed wherein the oil phase uses an ABA block copolymer of polalkylene glycol ether and hydroxstearic acid and the aqueous phase uses a polyalkylene glycol ether.

According to another embodiment, the microcapsules are formed wherein the oil phase uses an ABA block copolymer of polalkylene glycol ether and hydroxystearic acid emulsifier and the aqueous phase uses polyvinyl alcohol as the surfactant.

According to another embodiment, the microcapsules comprise other surfactants such as dodecyl benzene sulphonates, ethoxylated alkylaryl phosphate esters, lignosulphonates, styrene acrylic polymers, alkylnapthelene sulphonates, alkyl naphthalene sulfonate formaldehydes, naphthalene sulfonates. Commercially, dodecyl benzene sulphonates are available as Rhodacal, AGROSURF CA, AGROSURF PWS, ethoxylated alkylaryl phosphates ester are available as Rhodafac, alkyl naphthalene sulfonates are available as Supragil WP, Naxan PLUS; alkyl naphthalene sulfonate formaldehyde is available as TERSPERSE 2425, Daxad 11; naphthalene sulfonates are available as TAMOL FBP1, PROPOL DSN. Lignosulfonates are commercially available as REAX 88, Marsparse, Lignosite.

According to an embodiment, the surfactant used in the formation of the capsules is a blend of non-ionic surfactant and anionic surfactant. According to an embodiment, the emulsifier used in the oil phase and the aqueous phase is a blend of alkoxylated triglycerides and dodecyl benzene sulphonates, in the preparation of aminoplast microcapsules.

According to an embodiment of the invention, the water dispersible granule composition comprises microcapsules encapsulating at least one active ingredient encapsulated within a polyurea shell wall, wherein the microcapsules comprise at least one first surfactant selected from the group consisting of an ABA block copolymer of polyalkylene glycol ether and hydroxystearic acid and alkoxylated triglycerides, and a second surfactant selected from the group consisting polyvinyl alcohol and polyalkylene glycol ether.

Typically, the microcapsules formed according to an embodiment of this invention have a size range of 0.2 microns to 9 microns. Preferably, the capsules have an average size of around 3 microns. Preferably, the capsules have a particle size distribution from 0.3 microns to 3 microns. It has been surprisingly determined by the inventors that the microcapsules have an improved capsule size range, based on the choice of surfactants, as demonstrated in Table 3 below. It has also been determined that while several non-ionic and anionic surfactants may be employed, the choice of surfactant will depend on the type of active ingredients and the polymer used for encapsulated. For instance, an attempt to encapsulate Clomazone and 2,4 D ethyl ester with polyalkylene glycol ether or ethylene oxide-propylene oxide block copolymer and block copolymer of polyalkylene glycol ether and hydroxystearic acid resulted in a phase inversion with no success.

The microcapsules prepared are then blended with a mixture of an inert filler, which has been micronized in a dry milling apparatus, to a particle size of around 0.1 microns to 50 microns, preferably 0.1 microns to 20 microns, water and additional surfactants, if required, and then dried in a suitable drying equipment, such as a spray drier.

The inert filler can be one or more of mineral earths and clays such as bentonite, perlite, talc, kaolin, aluminium silicate, diatomaceous earth, attapulgite, clay, barium sulfate, mica, zeolites, calcium carbonate, fused sodium potassium, precipitated silica, precipitated silicates, aluminium silicate, sodium citrate, potassium citrate, magnesium citrate, etc.

The water dispersible granules formed, when dispersed, have a particle size in the range of 0.1 micron to 50 microns, preferably 0.1 micron to 20 micron, even more preferably 0.5 microns to 12 microns.

The dry granules having microcapsules with an aminoplast shell wall (using the urea formaldehyde resin) have an active ingredient concentration in the range of upto 20% on weight by weight basis. Preferably, the active ingredient encapsulated within the aminoplast shell wall is present in the range of up to about 15% by weight of the total water dispersible granule composition.

The water dispersible granule composition having microcapsules with an aminoplast shell and a polyurea shell wall have an active ingredient concentration in the range of up to 65% or more on a weight by weight basis. The concentration of the active ingredient achieved upon drying the capsules depends on the nature of the active ingredient.

The water dispersible granule composition having microcapsules having a polyurea shell wall alone, can have an active ingredient concentration up to at least 75% or more on a weight by weight basis upon drying.

According to another embodiment of the invention, the water dispersible granule composition comprises microcapsules encapsulating at least one first agrochemical active ingredient encapsulated within a polymeric shell wall, a second agrochemical active ingredient which is not encapsulated, an inert particulate filler and agrochemical excipients, wherein the microcapsules comprise at least one non-ionic surfactant of polyalkylene glycol ether, block copolymers of polyalkylene glycol ether and hydroxystearic acid, ethoxylated alcohols, etho-propoxylated tristyrlphenols, alkoxylated triglycerides.

Preferably, the non-ionic surfactant is selected from the group consisting of block copolymer of polyalkylene glycol ether and hydroxystearic acid, etho-propoxylated tristyrlphenols, alkoxylated triglycerides.

The first agrochemical active ingredient can be a pesticide, a plant growth regulant, etc. The first agrochemical active ingredient can be an insecticide, a fungicide, a herbicide or a mixture thereof. According to an embodiment, the agrochemical active ingredient is a water- immiscible active. According to an embodiment, the agrochemical active ingredient can be a low-melting pesticide or a liquid pesticide, or can be rendered into a liquid form through use of a solvent or other means.

The second agrochemical active ingredient can be a pesticide, a plant growth regulant, etc. The second agrochemical active ingredient can be an insecticide, a fungicide or a herbicide or a mixture thereof. According to an embodiment, the second agrochemical active ingredient is a solid active ingredient.

According to an embodiment the first agrochemical active ingredient is a pyrethroid insecticide and the second active ingredient is a neonicotinoid insecticide. According to further embodiment the first agrochemical active ingredient is lambda cyhalothrin and the second agrochemical active ingredient is thiamethoxam. According to further embodiment is that the first agrochemical active ingredient is lambda cyhalothrin and the second agrochemical active ingredient is imidacloprid. The first and second active ingredient can also be fungicides.

The microcapsules encapsulating the first agrochemical active ingredient can also include surfactants such as dodecyl benzene sulphonates, ethoxylated alkylaryl phosphate esters, lignosulphonates, naphthalene phenol condensates, styrene acrylic polymers and alkylnapthelene sulphonates. Commercially, dodecyl benzene sulphonates are available as Rhodacal and AGROSURF; ethoxylated alkylaryl phosphates ester are available as Rhodafac; alkyl naphthalene sulfonates are available as Supragil WP and Naxan PLUS; alkyl naphthalene sulfonate formaldehyde is available as TERSPERSE 2425 and Daxad 11; naphthalene sulfonates are available as TAMOL FBP1 and PROPOL DSN. Lignosulfonates are commercially available as REAX 88, Marsparse, Lignosite.

The first agrochemical active ingredient can be encapsulated in an aminoplast shell wall (using butylated urea formaldehyde resin) or a polyurea shell wall, or both.

The second active ingredient is suspended in water using dispersing agents such as polycarboxylates, sulphosuccinates, alkyl naphthalene sulfonates. Commercially polycarboxylates are available as Carbapol, Acrysol, Polygel and Sokalan; alkyl naphthalene sulfonates are available as Supragil WP and NAXAN Plus; sulphosuccinates are available as Alkanate, AGROSURF and TERMUL 3665. The suspension is milled to an average particle size of 0.1 to 50 microns, preferably 0.1 to 20 microns, even more preferably 0.1 to 5 microns.

The microcapsule suspension of the first agrochemical active ingredient and the suspension of the second agrochemical active ingredient are mixed and blended with one or more inert fillers and water and dried in a suitable spray drying or spray granulation apparatus. The water dispersible granules formed have an average particle size of 0.1 microns to 50 microns, preferably, 0.1 microns to 20 microns. The first agrochemical active ingredient, which is encapsulated, can be present in the range of 0.1% to 50% of the water dispersible granule composition, preferably 0.1% to 30%, depending on the nature of the first active ingredient. The second agrochemical active ingredient can be present in the range of 0.1% to 50% of the composition, depending on the nature of the second active ingredient.

### EXAMPLES - PREPARATION

### EXAMPLE 1: Preparation of Lambda Cyhalothrin capsulated suspension - water dispersible granules

41.6 gm of Lambda cyhalothrin (96% purity) was melted and dissolved in 10 grams of Solvesso 150. To this solution, 3 gms of block copolymer of TERMUL 2510 was added, along with 1 gram of castor oil and 1 gram of Cymel U-80 (urea formaldehyde), to prepare an oil phase. An aqueous phase was prepared by mixing 3 gm of ATLAS G-5000, 0.2 gram of antifoaming agent, in 36.2 grams of water. The oil phase was added drop-wise to the aqueous phase under high shear at around 1500 rpm. pH was maintained at around 2, using 2gm of 1N HCl. The reaction was kept for about 2 hours at 55 degree C. After 2 hours, the reaction mixture was neutralized with 2 gm of 1N NaoH. The suspension had the following capsule size distribution: D10: 0.8 microns, D50: 1.88 microns, D90: 3.2 microns. 25 grams of the prepared suspension was blended with 40 grams of Perlite, 25 grams of Mica, 8.5 grams of Reax 88, 8.5 grams of TERSPERSE 2425, 2 grams of Supragil WP, 80 grams of water and the slurry was then spray dried at an outlet temperature of about 75 °C and an inlet temperature around 110 °C. The composition had the following particle size distribution: D10: 3.18 microns, D50: 10.13 microns, D90: 27.8 microns.

### EXAMPLE 2: Preparation of Clomazone 36% CS WG

37.5 gram of Clomazone (having purity around 97%) was dissolved with 2 gm of MDI, 1.2 gm of TERMUL 2510 to prepare the oil phase. Aqueous phase was prepared by mixing 12 grams of 15% polyvinyl alcohol, 0.3 gram of antifoaming agent, 5 gram of lignin sulphonate, in 24.1 grams of water. Oil phase was added the aqueous phase, drop-wise, under high shear at around 1500 rpm at a temperature of 50 degree C. After 3-5 minutes, 15.8 gram of 5.33% aqueous solution of diethylene triamine drop-wise to the reaction mixture and kept the mixture under high shear for about 2 hours. After 2 hours, the reaction mixture was neutralized with 0.3 grams of citric acid to give 36% Clomazone polyurea capsules. The capsules have the following capsule size distribution: D10 0.8 microns D50: 1.48 microns, D90: 2.4 microns.

37.5 gram of Clomazone (purity around 97%) was dissolved with 1 gram of Cymel U80 monomer, 1 gram of castor oil and 2 gram of Arlacel P135 to prepare the oil phase. An aqueous phase was prepared by using 12 grams of 15% polyvinyl alcohol, 0.2 gram of antifoaming agent, in 42.3 grams of water. Oil phase was added drop wise to the aqueous phase under high shear around 1500 rpm at about 55°C. pH was maintained at around 2 using 2 gram of 1N HCI. The reaction was allowed to continue for about 2 hours. After 2 hours, the reaction was neutralized with 2 gram of 1 N NaOH to give 36% Clomazone aminoplast capsules.

72.2 grams of the Clomazone Polyurea suspension, 27.78 grams of the Clomazone Aminoplast capsulated suspension was blended with 10 grams of sodium citrate, 8 grams of TERSPERSE 2425, 0.2 grams of citric acid, 2 grams of Supragil WP, 14.25 grams of clay and 4 grams of precipitated silica and 14 grams of lignin sulphonate and 60 grams of water. The slurry was then dried in a spray drier at inlet temperature 110°C and outlet 73°C to give combination of 36% Clomazone polyurea and aminoplast capsules in a water dispersible granule form.

Alternatively, the Clomazone polyurea suspension was also individually blended with sodium citrate, citric acid, Supragil WP, TERSPERSE 2425, precipitated silica and lignin sulphonate to give 36% Clomazone polyurea capsules in a water dispersible granule form. This composition had the following particle size distribution: D10: 3 microns, D50: 7.16 microns, D90: 14.0 microns.

### EXAMPLE 3: Preparation of Cypermethrin and Chloropyrifos CS WG

53.2 grams of CPP active ingredient (95% purity) and 5.6 grams of Cypermethrin (92% purity) were mixed with 2 gram of block copolymer of TERMUL 2510, 3 grams of MDI to make the oil phase. The aqueous phase was made by mixing 24 grams of 15% polyvinyl alcohol, 10 grams of Lignin sulphonate, 0.2 gram of antifoaming agent in 59.8 grams of water. The oil phase was added drop-wise to the aqueous phase under high shear at around 1500 rpm at about 55 °C. After 5 minutes, 41.6 grams of 4% diethylene triamine solution was added to the reaction mixture and the reaction was kept for about 2 hours. After 2 hours, the mixture was neutralized with 0.6 grams of citric acid to give a capsulated suspension of Cypermethrin and Chloropyrifos.

186.6 gram of the capsulated suspension was blended with 10 gram of lignin sulphonate, 5 grams of TERSPERSE 2425, 1 gram of Supragil WP (alkyl naphthalene sulfonate) and 5.4 gram of clay and 26 grams of water. The slurry was then dried in a spray drier with inlet temperature 110°C and outlet temperature 73°C to give Cypermethrin 5% and Chloropyrifos 50% CS WG.

### EXAMPLE 4: Preparation of Lambda cyhalothrin (encapsulated) and Imidacloprid WG

41.6 gm of Lambda cyhalothrin (96% purity) was melted and dissolved in 10 grams of Solvesso 150. To this solution, 3 gms of block copolymer of TERMUL 2510 was added, along with 1 gram of castor oil and 1 gram of buylated urea formaldehyde monomer, to prepare an oil phase. An aqueous phase was prepared by mixing 3 gm of ATLAS G-5000, 0.2 gram of antifoaming agent, in 36.2 grams of water. The oil phase was added drop-wise to the aqueous phase under high shear at around 1500 rpm. pH was maintained at around 2, using 2gm of 1N HCI. The reaction was kept for about 2 hours at 55 degree C. After 2 hours, the reaction mixture was neutralized with 2 gm of 1N NaoH. 25 grams of the prepared suspension was blended with grams of, 80 grams of water and the slurry was then spray dried at around outlet temperature of about 75°C and around 110°C inlet temperature.

45 grams of Imidacloprid technical was suspended in 50 grams of water having 3 grams of TERSPERSE 2425, 1.5grams of sodium lignin sulphonate, 0.5 grams of TAMOL FBP1. The suspension was wet milled to get an average particle size of around 0.1 microns to 8 microns.

18.75 grams of the above Lambda cyhalothrin capsulated suspension and 30 grams of the Imidacloprid suspension were mixed with 35 grams of perlite, 22 grams of mica, 7.3 grams of ligin sulphonate, 7.3 grams of TERSPERSE 2425, 1.5 grams of Supragil WP and 75 grams of water. The slurry was dried in a spray drier at an inlet of 110 °C and outlet of 74°C to give water dispersible granules of capsulated Lambda Cyhalothrin and (non encapsulated) Imidacloprid. The composition had the following particle size distribution: D10: 3 microns D50: 10.18 D90: 26.0

### EXAMPLE 5: Preparation of Clomazone (encapsulated) and Metribuzin WG

37.5 gram of Clomazone (purity around 97%) was dissolved with 1 gram of Cymel U - 80 butylated urea formaldehyde monomer, 1 gram of castor oil and 2 gram of TERMUL 2510 to prepare the oil phase. An aqueous phase was prepared by using 12 grams of 15% polyvinyl alcohol, 0.2 gram of antifoaming agent, in 42.3 grams of water. Oil phase was added drop wise to the aqueous phase under high shear around 1500 rpm at about 55 °C. pH was maintained at around 2 using 2 gram of 1N HCl. The reaction was allowed to continue for about 2 hours. After 2 hours, the reaction was neutralized with 2 gram of 1 N NaOH to give 36% Clomazone aminoplast capsules.

45 grams of Metribuzin (95%) was suspended in 50 grams of water having 3 grams of Geropon SC 213, 1 grams of W2, 1 grams of lignin sulphonate. The suspension was wet milled to get an average particle size of around 0.1 microns to 8 microns.

16.67 grams of Clomazone capsulated suspension and 54.82 grams of Metribuzin suspension were mixed with 13 grams of sodium citrate, 10.4 grams of TERSPERSE 2425, 0.25 grams of citric acid, 2.6 grams of Supragil WP, 19.39 grams of clay and 19.65 grams of lignin sulphonate and 70 grams of water. The slurry was then dried in a spray drier at inlet temperature 110°C and outlet temperature 73°C to give water dispersible granules of encapsulated Clomazone and (non encapsulated) Metribuzin.

### EXAMPLE 6 2,4 D ethyl ester CS WG

40 gram of 2,4 D (having purity around 97%) was dissolved with 2 gm of MDI, 1.2 gm of block copolymer of TERMUL 2510 to prepare the oil phase. Aqueous phase was prepared by mixing 12 grams of 15% PVA, 0.2 gram of antifoaming agent, 5 gram of lignin sulphonate, in 23.6 grams of water. Oil phase was added to the aqueous phase, drop-wise, under high shear at around 1500 rpm at a temperature of 50°C. After 3-5 minutes, 15.7 gram of 4.45 % aqueous solution of diethylene triamine drop-wise to the reaction mixture and kept the mixture under high shear for about 2 hours. After 2 hours, the reaction mixture was neutralized with 0.3 grams of citric acid to give 38% 2,4 D ethyl ester polyurea microcapsules.

100 grams of the above microcapsule suspension was mixed with 9.6 grams of sodium citrate, 8 grams of Daxad 11, 0.2 grams of citric acid, 2 grams of NAXAN Plus, 14 grams of clay and 15 grams of lignin sulphonate and 52 grams of water. The slurry was then dried in a spray drier at inlet temperature 110°C and outlet temperature 73°C to give water dispersible granules of encapsulated 2,4 D ethyl ester.

### FIELD STUDIES:

Table 1 below demonstrates the superior nature of the compositions of the invention.

Trials were laid in the state of Maharashtra, India to evaluate various compositions including Lambda cyhalothrin on brinjal against the fruit borer. The plots size was 9 m2. All the recommended agronomic practices were followed. Single sprays of each treatment were applied with the help of knapsack sprayer. Observations of number of fruits infected and edible were made before and after spray on the 1^{st} day, 3^{rd} day, 6^{th} day, 9^{th} day and 12^{th} day of picking.

**Table 1:**

| CO DE NO | Formul ation applied Per Hectare | before spray observation | | 3 rd Day picking | | 6 th Day picking | | 9 th Day picking | | 12 th Day picking | | Yield 3^{rd} to 12 day picking | | Wasta ge % |
|---|---|---|---|---|---|---|---|---|---|---|---|---|---|---|
| | | Infect ed | Edi ble | Infect ed | Edi ble | Infect ed | Edi ble | Infect ed | Edi ble | Infect ed | Edi ble | Infect ed | Edi ble | |
| L1 | 200 | 120 | 450 | 300 | 600 | 250 | 125 | 180 | 100 | 300 | 100 | 1030 | 925 | 111.3514 |
| L2 | 200 | 200 | 630 | 150 | 450 | 200 | 600 | 80 | 90 | 0 | 500 | 430 | 1640 | 26.21951 |
| L3 | 200 | 150 | 480 | 100 | 300 | 220 | 550 | 0 | 250 | 280 | 370 | 600 | 1470 | 40.81633 |
| L4 | 200 | 160 | 630 | 50 | 650 | 20 | 500 | 100 | 250 | 140 | 500 | 310 | 1900 | 16.31579 |

L1 is Lambda cyhalothrin 10% emulsifiable concentrate.

L2 is Lambda cyhalothrin 10% capsulated suspension comprising non-ionic surfactants - polyalkylene glycol ether and block copolymer of polalkylene glycol ether and hydroxystearic acid.

L3 is Lambda cyhalothrin 10% extruded water dispersible granules prepared as per the teachings of US5739081.

L4 is Lambda cyhalothrin 10% Capsulated Suspension - Water dispersible granules (CS WG) as per an embodiment of the invention, as shown in Example 1 above.

Surprisingly, it is observed that L4, in accordance with an embodiment of the invention, gave the least amount of wastage in brinjal, specially when compared to the L2, which also comprises the same microcapsules as does L4.

### FIELD STUDIES: TRIALS IN PADDY

Lambda cyhalothrin compositions (Lambda cyhalothrin 10% CS WG applied at 200 grams per hectare) were prepared and evaluated on paddy against the *Leaf folder* (species *Lepidoptera*). The trial was laid out in the state of Gujarat, India. The plots size was 50 m2. In each plot 10 plants were tagged. All the recommended agronomic practices were followed. Observations of number of leaf folder were made before spray and on the 1^{st} day, 5^{th} day, 7^{th} day and 11^{th} day after spray.

**TABLE 2:**

| L4 | Total number of Leaf Folder | % Mortality |
|---|---|---|
| Number of leaf Folder/Plant | 5 | |
| Observation 1^{st} day after spray | 5 | 0% |
| Observation 5^{lh} day after spray | 2 | 60% |
| Observation 7^{th} day after spray | 2 | 60% |
| Observation 11^{th} day after spray | 1 | 80% |

| L13 | | |
|---|---|---|
| Number of leaf Folder/Plant | 4 | |
| Observation 1^{st} day after spray | 4 | 0% |
| Observation 5^{th} day after spray | 4 | 0% |
| Observation 7^{th} day after spray | 4 | 0% |
| Observation 11^{th} day after spray | 4 | 0% |

| L24 | | |
|---|---|---|
| Number of leaf Folder/Plant | 7 | |
| Observation (demo after 1 day) | 7 | 0% |
| Observation after 5^{th} day | 6 | 14% |
| Observation after 7^{th} day | 4 | 42.86% |
| Observation 11^{th} day | 2 | 71.43% |
| | | |

| L57 | | |
|---|---|---|
| Number of leaf Folder/Plant | 5 | |
| Observation (demo after 1 day) | 5 | 0% |
| Observation after 5^{th} day | 5 | 0% |
| Observation after 7^{th} day | 5 | 0% |
| Observation 11^{th} day | 5 | 0% |

| L16 | | |
|---|---|---|
| Number of leaf Folder/Plant | 7 | |
| Observation (demo after 1 day) | 7 | 0% |
| Observation after 5^{th} day | 5 | 28.5% |
| Observation after 7^{th} day | 4 | 42.86% |
| Observation 11^{th} day | 2 | 71.43% |

CONCLUSIONS: L4, comprising Lambda cyhalothrin 10% CS WG as per an embodiment of the invention, shows exceptionally good results with 60% mortality by the 7^{th} day after spray. L24, comprising Lambda cyhalothrin 10% CS WG as per an embodiment of the invention, comprising polyalkylene glycol ether and block copolymer of polyalkylene glycol ether and hydroxystearic acid in polyurea capsules, shows a good result also with 42.86% mortality by the 7^{th} day after spray. Surprisingly, prior art formulation L13, which comprises Lambda cyhalothrin 10% CS WG, based on the teachings of US5639710, employing polyvinyl alcohol does not demonstrate any mortality up to 11^{th} day after spray. L57, which comprises Lambda cyhalothrin 10% CS WG, wherein the microcapsules comprise tristyrlphenol phosphate within a polyurea shell wall, does not demonstrate any mortality upto the 11^{th} day. L16, which comprises Lambda cyhalothrin 10% CS WG within a polyurea shell wall using a blend of alkoxylated triglycerides and calcium dodecyl benzene sulphonate, also showed good mortality from the 5^{th} day to the 11^{th} day.

**TABLE 3: Capsulated suspension particle distribution size evalution:**

| Sample | Composition | D10 | D50 | D90 |
|---|---|---|---|---|
| L4 | Lambda cyhalothrin using aminoplast microcapsules and polyalkylene glycol ether and ABA block copolymer of polyalkylene glycol ether and hydroxstearic acid | 0.8 | 1.88 | 3.2 |
| L24 | Lambda cyhalothrin using polyurea and polylakylene glycol ether and ABA block copolymer of polyalkylene glycol ether and hydroxstearic acid | 0.85 | 2.52 | 4.3 |
| L57 | Lambda cyhalothrin in polyurea shell wall and tristyrlphenol ethoxylate surfactant (Soprophor CY/8) | 1.1 | 2.5 | 11.14 |
| L16 | Lambda cyhalothrin in polyurea shell wall and using a blend of alkoxylated trigylyceride and calcium dodecyl benzene sulphonate, and polyvinyl alcohol. | 0.85 | 2.49 | 4.5 |

L4, L16 and L24, with the selected surfactants, gave a better controlled capsule size distribution compared to L57.

### FIELD EVALUATION IN OKRA

Trials were laid in the state of Maharashtra, India to evaluate various compositions including Lambda cyhalothrin (encapsulated) and Imidacloprid water dispersible granules on okra against the fruit borer, jassids, aphids and white fly. The plots size was 9 m2. All the recommended agronomic practices were followed. Single sprays of each treatment were applied with the help of knapsack sprayer. Observations of number of fruits infected and edible were made before and after spray on the 1^{st} day, 3^{rd} day, 6^{th} day, 9^{th} day of picking.

**TABLE 4**

| | Before Spray Observations | | | | 3 rd Day observation | | | | 6 th day observations | | | | 9 th Day observations | | | |
|---|---|---|---|---|---|---|---|---|---|---|---|---|---|---|---|---|
| Code | Thr ips | Affi ds | Jas sids | Lep dptr | Thr ips | Affi ds | Jas sids | Lep dptr | Thr ips | Affi ds | Jas sids | Lep dptr | Thr ips | Affi ds | Jas sids | Lep dptr |
| Z-1 (EP184 4653) | 5 | 24 0 | 145 | 5 | 3 | 70 | 120 | 3 | 3 | 76 | 24 | 3 | 4 | 60 | 30 | 5 |
| Z-2 (US493 6901) | 4 | 30 0 | 150 | 7 | 3 | 20 0 | 120 | 4 | 2 | 80 | 27 | 6 | 2 | 40 | 25 | 6 |
| Z-3 (embodi ment) | 6 | 25 0 | 135 | 6 | 2 | 75 | 100 | 2 | 3 | 35 | 18 | 3 | 2 | 10 | 15 | 1 |

**TABLE 5**

| | % MORTALITY | | | | | | | | | | | | | | | |
|---|---|---|---|---|---|---|---|---|---|---|---|---|---|---|---|---|
| | Before Spray Observations | | | | 3rd Day observation | | | | 6th day observation | | | | 9th Day Observation | | | |
| Z1 | NA | NA | NA | NA | 40% | 71% | 17% | 40% | 40% | 68% | 83% | 40% | 20% | 75% | 79% | 0% |
| Z2 | NA | NA | NA | NA | 25% | 33% | 20% | 43% | 50% | 73% | 82% | 14% | 50% | 87% | 83% | 14% |
| Z3 | NA | NA | NA | NA | 67% | 70% | 26% | 67% | 50% | 86% | 87% | 50% | 67% | 96% | 89% | 83% |

Z1 is a water dispersible granule composition comprising Lambda cyhalothrin 7.5% (encapsulated) + Imidacloprid 12.5% based on the prior art disclosure in EP1844653. This has the following particle size distribution: D10: 1.41 microns D50: 6.37 microns, D90: 20.71 microns.

Z2 is a water dispersible granular composition of Lambda cyhalothrin 7.5% (encapsulated) + Imidacloprid 12.5% based on the teachings of US4936901. This has a particle size distribution of D10: 2.28 microns, D50: 11 microns D90: 31.43 microns.

The compositions of Z1 and Z2 are disclosed below:

| | **Z - 1** | **Z - 2** |
|---|---|---|
| | EP1844653 | US 4936901 |
| Lamda Cyhalothrin (96%) Purity. | 7.8 | 7.8 |
| Imidacloprid (97%) Purity. | 13.2 | 13.2 |
| Thiamethoxam technical | 0 | 0 |
| Cyclohexanone | 0 | 0 |
| Poly methyl diisocyanate | 1.5 | 1.5 |
| Metasperse 550S | 20 | 0 |
| Reax 88B (Sod. Lignin sulfonate) | 0 | 6.7 |
| Geropon T77 | 0 | 8 |
| Supragil WP | 0 | 0.9 |
| Triethylamine | 0.2 | 0.2 |
| Citric acid | 0.1 | 0.1 |
| Ammonium sulphate | 0 | 37 |
| Precipitated silica | 0 | 5 |
| China clay | 0 | 20 |
| Lactose monohydrate | 51 | 0 |
| Sodium dioctyl sulfosuccinate | 6 | 0 |
| Antifoam (Silicone emulsion) | 0.2 | 0.1 |

Z-3 is a water dispersible granule composition comprising Lambda cyhalothrin 7.5% (encapsulated) + Imidacloprid 12.5% according to an embodiment of the invention disclosed in Example 4. This has the following particle size distribution: D10: 3 microns, D50: 10.18 microns, D90: 26.18 microns.

Z3 clearly shows a higher mortality, on the 3^{rd} day, 6^{th} day and 9^{th} day after treatment, in various sucking pests and Lepidoptera pest population. Also, Z3 showed the highest suspensibility (90%) as compared to Z1 (70%) and Z2 (73%).

### FIELD TRIAL OF CLOMAZONE 36% CS WG

Trials were laid in the state of Madhya Pradesh, India to evaluate various compositions of Clomazone CS WG on soyabean. The plots size was 4 m2. All the recommended agronomic practices were followed. Single sprays of each treatment were applied with the help of knapsack sprayer. Observations of weed count and resurgence count were made before and after spray on the 1^{st} day, 3^{rd} day, 6^{th} day, 9^{th} day and 14^{th} day of picking.

**TABLE 6**

| | Before Spray Observ ations | | 3 rd Day observa tion | | % Reduction | | 6 th day observ ations | | % Reduction | | 9 th Day observa tions | | % Reductio n | | 14 th Day observatio ns | | % Reduction | |
|---|---|---|---|---|---|---|---|---|---|---|---|---|---|---|---|---|---|---|
| C o d e | Gr as se s | Br oa d le av es | Gr as se s | Br oa d le av es | Gras ses | Bro ad leav es | G r a s s e s | Br oa d le av es | Grass es | Bro ad lea ves | G ra s s e s | Br oa d le av es | Gr ass es | Bro ad lea ves | Gra sse s | Br oa d lea ve s | Gra sse s | Broa d leav es |
| C1 | 287 | 5 | 259 | 5 | 10% | 0% | 247 | 5 | 14% | 0% | 66 | 4 | 77% | 20% | 35 | 3 | 88% | 40% |
| C2 | 262 | 7 | 184 | 6 | 30% | 14% | 132 | 6 | 50% | 14% | 42 | 3 | 84% | 57 % | 16 | 1 | 94% | 86% |

C1 is Clomazone 36% CS commercially available as COMMAND®. C2 is Clomazone 36% WG according to an embodiment disclosed in EXAMPLE 2.
Surprisingly, yet clearly,C2 has a better control over weeds than C1.

## Claims

1. A water dispersible granule composition comprising:
microcapsules comprising at least one agrochemical active ingredient encapsulated within a polymeric shell wall selected from a urea formaldehyde shell wall, a polyurea shell wall and both;
at least one inert filler; and
at least one agrochemical excipients;
wherein the microcapsules comprise at least one non-ionic surfactant selected from the group consisting of block copolymers of polyalkylene glycol ether and hydroxystearic acid, ethoxylated alcohols, ethoxylated tristyrylphenols, etho-propoxylated tristyrylphenols, alkoxylated triglycerides.

2. A water dispersible granule composition according to claim 1 comprising:
microcapsules comprising at least one agrochemical active ingredient encapsulated within a urea formaldehyde shell wall;
optionally, microcapsules comprising the at least one agrochemical active ingredient encapsulated within a polyurea shell wall.

3. The water dispersible granule composition of claim 1 or 2, wherein the particle size and microcapsules are in the size range of 0.1 microns to 50 microns.

4. The water dispersible granule composition of claim 1 or 2, wherein the agrochemical active ingredient comprises a pesticide or a plant growth regulator.

5. The water dispersible granule composition of claim 1 or 2, wherein the agrochemical active ingredient is a pyrethroid insecticide.

6. The water dispersible granule composition of claim 1 or 2, wherein the agrochemical active ingredient is lambda cyhalothrin.

7. The water dispersible granule composition of claim 1 or 2, wherein the agrochemical active ingredient is cypermethrin and chloropyrifos.

8. The water dispersible granule composition of claim 1 or 2, wherein the agrochemical active ingredient is clomazone.

9. The water dispersible granule composition of claim 1 or 2, wherein the microcapsules further comprises a polyalkylene glycol ether surfactant, wherein the non-ionic surfactant is a block copolymer of polalkylene glycol ether and hydroxystearic acid.

10. The water dispersible granule composition of claim 1 or 2, wherein the non-ionic surfactant is an alkoxylated triglyceride.

11. The water dispersible granule composition of claim 1 or 2, wherein the microcapsules also comprise an anionic surfactant.

12. The water dispersible granule composition of claim 11, wherein the anionic surfactant is dodecyl benzene sulfonate.

13. The water dispersible granule composition of claim 1 or 2, wherein the inert filler comprises at least one of bentonite, perlite, talc, kaolin, aluminium silicate, diatomaceous earth, attapulgite, barium sulfate, mica, zeolites, calcium carbonate, fused sodium potassium, precipitated silica, precipitated silicates, aluminium silicate, sodium citrate, potassium citrate, magnesium citrate, clay.

14. A water dispersible granule composition according to claim 1,comprising:
at least one second agrochemical active ingredient which is not encapsulated;
wherein the at least one non-ionic surfactant is selected from the group consisting of ABA block copolymers of polyalkylene glycol ether and hydroxystearic acid, ethoxylated alcohols, etho-propoxylated tristyrlphenols, alkoxylated triglycerides.

15. The water dispersible granule composition of claim 14, wherein the first agrochemical active ingredient comprises a pyrethroid insecticide.

16. The water dispersible granule composition of claim 15, wherein the second agrochemical active ingredient comprises a neonicotinyl insecticide.

17. The water dispersible granule composition of claim 14, wherein the first agrochemical active ingredient comprises lambda cyhalothrin.

18. The water dispersible granule composition of claim 17, wherein the second agrochemical active ingredient comprises thiamethoxam or imidacloprid.

19. The water dispersible granule composition of claim 14, wherein the first agrochemical active is clomazone.

20. The water dispersible granule composition of claim 19, wherein the second agrochemical active is metribuzin.

21. A water dispersible granule composition according to claim 1, comprising:
microcapsules comprising at least one agrochemical active ingredient encapsulated within a polyurea shell wall, wherein the microcapsules comprise at least one first surfactant from the group consisting of block copolymer of polyalkylene glycol ether and hydroxystearic acid, etho-propoxylated tristyrlphenols, alkoxylated triglycerides and a second surfactant selected from the group consisting of polalkylene glycol ether and polyvinyl alcohol.

22. The water dispersible granule composition of claim 21, wherein the first surfactant is block copolymer of polalkylene glycol ether and hydroxystearic acid and the second surfactant is polyalkylene glycol ether.

23. The water dispersible granule composition of claim 22, wherein the active ingredient is a pyrethroid.

24. The water dispersible granule composition of claim 22, wherein the active ingredient is lambda cyhalothrin.

25. The water dispersible granule composition of claim 21, wherein the first surfactant is block copolymer of polalkylene glycol ether and hydroxstearic acid and the second surfactant is polyvinyl alcohol.

26. The water dispersible granule composition of claim 25, wherein the active ingredient is clomazone.

27. The water dispersible granule composition of claim 25, wherein the active ingredient is a 2,4 D ester.

28. The water dispersible granule composition of claim 25, wherein the active ingredient is chloropyrifos.

29. The water dispersible granule composition of claim 21, wherein the microcapsules also comprise an anionic surfactant.

## Patentansprüche

1. Wasserdispergierbare Granulatzusammensetzung, umfassend:
Mikrokapseln, umfassend mindestens einen agrochemischen Wirkstoff, der in eine polymere Hüllenwand eingekapselt ist, ausgewählt aus einer Harnstoff-Formaldehyd-Hüllenwand, einer Polyharnstoffhüllenwand und beiden;
mindestens einen inerten Füllstoff; und
mindestens einen agrochemischen Hilfsstoff; wobei die Mikrokapseln mindestens ein nichtionisches Tensid umfassen, ausgewählt aus der Gruppe bestehend aus Blockcopolymeren aus Polyalkylenglycolether und Hydroxystearinsäure, ethoxylierten Alkoholen, ethoxylierten Tristyrylphenolen, ethopropoxylierten Tristyrylphenolen, alkoxylierten Triglyceriden.

2. Wasserdispergierbare Granulatzusammensetzung nach Anspruch 1, umfassend:
Mikrokapseln, umfassend mindestens einen agrochemischen Wirkstoff, der in eine Harnstoff-Formaldehyd-Hüllenwand eingekapselt ist;
gegebenenfalls Mikrokapseln, umfassend mindestens einen agrochemischen Wirkstoff, der in eine Polyharnstoffhüllenwand eingekapselt ist.

3. Wasserdispergierbare Granulatzusammensetzung nach Anspruch 1 oder 2, wobei die Partikelgröße und Mikrokapseln im Größenbereich von 0,1 µm bis 50 µm liegen.

4. Wasserdispergierbare Granulatzusammensetzung nach Anspruch 1 oder 2, wobei der agrochemische Wirkstoff ein Pestizid oder einen Pflanzenwachstumsregulator umfasst.

5. Wasserdispergierbare Granulatzusammensetzung nach Anspruch 1 oder 2, wobei der agrochemische Wirkstoff ein Pyrethroid-Insektizid ist.

6. Wasserdispergierbare Granulatzusammensetzung nach Anspruch 1 oder 2, wobei der agrochemische Wirkstoff Lambda-Cyhalothrin ist.

7. Wasserdispergierbare Granulatzusammensetzung nach Anspruch 1 oder 2, wobei der agrochemische Wirkstoff Cypermethrin und Chlorpyrifos ist.

8. Wasserdispergierbare Granulatzusammensetzung nach Anspruch 1 oder 2, wobei der agrochemische Wirkstoff Clomazon ist.

9. Wasserdispergierbare Granulatzusammensetzung nach Anspruch 1 oder 2, wobei die Mikrokapseln weiterhin ein Polyalkylenglycolethertensid umfassen, wobei das nichtionische Tensid ein Blockcopolymer aus Polyalkylenglycolether und Hydroxystearinsäure ist.

10. Wasserdispergierbare Granulatzusammensetzung nach Anspruch 1 oder 2, wobei das nichtionische Tensid ein alkoxyliertes Triglycerid ist.

11. Wasserdispergierbare Granulatzusammensetzung nach Anspruch 1 oder 2, wobei die Mikrokapseln auch ein anionisches Tensid umfassen.

12. Wasserdispergierbare Granulatzusammensetzung nach Anspruch 11, wobei das anionische Tensid Dodecylbenzolsulfonat ist.

13. Wasserdispergierbare Granulatzusammensetzung nach Anspruch 1 oder 2, wobei der inerte Füllstoff mindestens eines der folgenden umfasst: Bentonit, Perlit, Talk, Kaolin, Aluminiumsilicat, Diatomeenerde, Palygorskit, Bariumsulfat, Glimmer, Zeolithe, Calciumcarbonat, fusioniertes Natriumkalium, gefällte Kieselsäure, gefällte Silikate, Aluminiumsilikat, Natriumcitrat, Kaliumcitrat, Magensiumcitrat, Ton.

14. Wasserdispergierbare Granulatzusammensetzung nach Anspruch 1, umfassend:
mindestens einen zweiten agrochemischen Wirkstoff, der nicht eingekapselt ist;
wobei mindestens ein nichtionisches Tensid ausgewählt ist aus der Gruppe bestehend aus ABA-Blockcopolymereren aus Polyalkylenglycolether und Hydroxystearinsäure, ethoxylierten Alkoholen, ethopropoxylierten Tristyrylphenolen, alkoxylierten Triglyceriden.

15. Wasserdispergierbare Granulatzusammensetzung nach Anspruch 14, wobei der erste agrochemische Wirkstoff ein Pyrethroid-Insektizid umfasst.

16. Wasserdispergierbare Granulatzusammensetzung nach Anspruch 15, wobei der zweite agrochemische Wirkstoff ein Neonicotinyl-Insektizid umfasst.

17. Wasserdispergierbare Granulatzusammensetzung nach Anspruch 14, wobei der erste agrochemische Wirkstoff Lambda-Cyhalothrin umfasst.

18. Wasserdispergierbare Granulatzusammensetzung nach Anspruch 17, wobei der zweite agrochemische Wirkstoff Thiamethoxam oder Imidacloprid umfasst.

19. Wasserdispergierbare Granulatzusammensetzung nach Anspruch 14, wobei der erste agrochemische Wirkstoff Clomazon ist.

20. Wasserdispergierbare Granulatzusammensetzung nach Anspruch 19, wobei der zweite agrochemische Wirkstoff Metribuzin ist.

21. Wasserdispergierbare Granulatzusammensetzung nach Anspruch 1, umfassend:
Mikrokapseln, umfassend mindestens einen agrochemischen Wirkstoff, der in einer Polyharnstoffhüllenwand eingekapselt ist, wobei die Mikrokapseln mindestens ein erstes Tensid, ausgewählt aus der Gruppe bestehend aus Blockcopolymeren aus Polyalkylenglycolether und Hydroxystearinsäure, ethopropoxylierten Tristyrylphenolen, alkoxylierten Triglyceriden, und ein zweites Tensid, ausgewählt aus der Gruppe bestehend aus einem Polyalkylenglycolether und Polyvinylalkohol, umfasst.

22. Wasserdispergierbare Granulatzusammensetzung nach Anspruch 21, wobei das erste Tensid ein Blockcopolymer aus Polyalkylenglycolether und Hydroxystearinsäure und das zweite Tensid Polyalkylenglycolether ist.

23. Wasserdispergierbare Granulatzusammensetzung nach Anspruch 22, wobei der agrochemische Wirkstoff ein Pyrethroid ist.

24. Wasserdispergierbare Granulatzusammensetzung nach Anspruch 22, wobei der agrochemische Wirkstoff Lambda-Cyhalothrin ist.

25. Wasserdispergierbare Granulatzusammensetzung nach Anspruch 21, wobei das erste Tensid ein Blockcopolymer aus Polyalkylenglycolether und Hydroxystearinsäure und das zweite Tensid Polyvinylalkohol ist.

26. Wasserdispergierbare Granulatzusammensetzung nach Anspruch 25, wobei der agrochemische Wirkstoff Clomazon ist.

27. Wasserdispergierbare Granulatzusammensetzung nach Anspruch 25, wobei der agrochemische Wirkstoff ein 2,4-D-Ester ist.

28. Wasserdispergierbare Granulatzusammensetzung nach Anspruch 25, wobei der agrochemische Wirkstoff Chlorpyrifos ist.

29. Wasserdispergierbare Granulatzusammensetzung nach Anspruch 21, wobei die Mikrokapseln auch ein anionisches Tensid umfassen.

## Revendications

1. Composition de granules dispersables dans l'eau, comprenant :
des microcapsules comprenant au moins un composant agrochimiquement actif encapsulé dans une paroi d'enveloppe polymère choisie parmi une paroi d'enveloppe à base d'urée-formaldéhyde, une paroi d'enveloppe à base de polyurée et les deux ;
au moins une charge inerte ; et
au moins un excipient agrochimique ;
dans laquelle les microcapsules comprennent au moins un tensioactif non ionique choisi dans l'ensemble constitué par des copolymères séquencés de polyalkylèneglycoléther et d'acide hydroxystéarique, des alcools éthoxylés, des tristyrylphénols éthoxylés, des tristyrylphénols étho-propoxylés, des triglycérides alcoxylés.

2. Composition de granules dispersables dans l'eau selon la revendication 1, comprenant :
des microcapsules comprenant au moins un composant agrochimiquement actif encapsulé dans une paroi d'enveloppe à base d'urée-formaldéhyde ;
en option, des microcapsules comprenant ledit au moins un composant agrochimiquement actif encapsulé dans une paroi d'enveloppe à base de polyurée.

3. Composition de granules dispersables dans l'eau selon la revendication 1 ou 2, dans laquelle la taille de particule et les microcapsules sont dans la plage granulométrique de 0,1 micromètre à 50 micromètres.

4. Composition de granules dispersables dans l'eau selon la revendication 1 ou 2, dans laquelle le composant agrochimiquement actif comprend un pesticide ou un régulateur de croissance végétale.

5. Composition de granules dispersables dans l'eau selon la revendication 1 ou 2, dans laquelle le composant agrochimiquement actif est un insecticide pyréthroïde.

6. Composition de granules dispersables dans l'eau selon la revendication 1 ou 2, dans laquelle le composant agrochimiquement actif est la lambda cyhalothrine.

7. Composition de granules dispersables dans l'eau selon la revendication 1 ou 2, dans laquelle le composant agrochimiquement actif est la cyperméthrine et le chloropyrifos.

8. Composition de granules dispersables dans l'eau selon la revendication 1 ou 2, dans laquelle le composant agrochimiquement actif est la clomazone.

9. Composition de granules dispersables dans l'eau selon la revendication 1 ou 2, dans laquelle les microcapsules comprennent en outre un tensioactif polyalkylèneglycoléther, le tensioactif non ionique étant un copolymère séquencé de polyalkylèneglycoléther et d'acide hydroxystéarique.

10. Composition de granules dispersables dans l'eau selon la revendication 1 ou 2, dans laquelle le tensioactif non ionique est un triglycéride alcoxylé.

11. Composition de granules dispersables dans l'eau selon la revendication 1 ou 2, dans laquelle les microcapsules comprennent également un tensioactif anionique.

12. Composition de granules dispersables dans l'eau selon la revendication 11, dans laquelle le tensioactif anionique est un dodécylbenzène-sulfonate.

13. Composition de granules dispersables dans l'eau selon la revendication 1 ou 2, dans laquelle la charge inerte comprend au moins une substance choisie parmi la bentonite, la perlite, le talc, le kaolin, le silicate d'aluminium, la terre à diatomées, l'attapulgite, le sulfate de baryum, le mica, les zéolithes, le carbonate de calcium, le sodium-potassium fondu, la silice précipitée, les silicates précipités, le silicate d'aluminium, le citrate de sodium, le citrate de potassium, le citrate de magnésium, l'argile.

14. Composition de granules dispersables dans l'eau selon la revendication 1, comprenant :
au moins un deuxième composant agrochimiquement actif qui n'est pas encapsulé ;
ledit au moins un tensioactif non ionique étant choisi dans l'ensemble constitué par des copolymères séquencés ABA de polyalkylèneglycoléther et acide hydroxystéarique, des alcools éthoxylés, des tristyrylphénols étho-propoxylés, des triglycérides alcoxylés.

15. Composition de granules dispersables dans l'eau selon la revendication 14, dans laquelle le premier composant agrochimiquement actif comprend un insecticide pyréthroïde.

16. Composition de granules dispersables dans l'eau selon la revendication 15, dans laquelle le deuxième composant agrochimiquement actif comprend un insecticide néonicotinyle.

17. Composition de granules dispersables dans l'eau selon la revendication 14, dans laquelle le premier composant agrochimiquement actif comprend de la lambda cyahalothrine.

18. Composition de granules dispersables dans l'eau selon la revendication 17, dans laquelle le deuxième composant agrochimiquement actif comprend du thiaméthoxame ou de l'imidaclopride.

19. Composition de granules dispersables dans l'eau selon la revendication 14, dans laquelle le premier composant agrochimiquement actif est la clomazone.

20. Composition de granules dispersables dans l'eau selon la revendication 19, dans laquelle le deuxième composant agrochimiquement actif est la métribuzine.

21. Composition de granules dispersables dans l'eau selon la revendication 1, comprenant :
des microcapsules comprenant au moins un composant agrochimiquement actif encapsulé dans une paroi d'enveloppe à base de polyurée, les microcapsules comprenant au moins un premier tensioactif choisi dans l'ensemble constitué par un copolymère séquencé de polyalkylèneglycoléther et acide hydroxystéarique, des tristyrylphénols étho-propoxylés, des triglycérides alcoxylés et un deuxième tensioactif choisi dans l'ensemble constitué par un polyalkylèneglycoléther et un poly(alcool vinylique).

22. Composition de granules dispersables dans l'eau selon la revendication 21, dans laquelle le premier tensioactif est un copolymère séquencé de polyalkylèneglycol et acide hydroxystéarique et le deuxième tensioactif est un polyalkylèneglycoléther.

23. Composition de granules dispersables dans l'eau selon la revendication 22, dans laquelle le composant actif est un pyréthroïde.

24. Composition de granules dispersables dans l'eau selon la revendication 22, dans laquelle le composant actif est la lambda cyhalothrine.

25. Composition de granules dispersables dans l'eau selon la revendication 21, dans laquelle le premier tensioactif est un copolymère séquencé de polyalkylèneglycoléther et acide hydroxystéarique et le deuxième tensioactif est le poly(alcool vinylique).

26. Composition de granules dispersables dans l'eau selon la revendication 25, dans laquelle le composant actif est la clomazone.

27. Composition de granules dispersables dans l'eau selon la revendication 25, dans laquelle le composant actif est un ester de 2,4D.

28. Composition de granules dispersables dans l'eau selon la revendication 25, dans laquelle le composant actif est le chloropyrifos.

29. Composition de granules dispersables dans l'eau selon la revendication 21, dans laquelle les microcapsules comprennent également un tensioactif anionique.
